**Europäisches Patentamt**

**European Patent Office**

**Office européen des brevets**

(19)

(11) Veröffentlichungsnummer: **0 222 078 B1**

(12) # EUROPÄISCHE PATENTSCHRIFT

(45) Veröffentlichungstag der Patentschrift:
16.05.90

(51) Int. Cl.⁵: **C04B 18/12, F27B 1/00**

(21) Anmeldenummer: **86111256.3**

(22) Anmeldetag: **14.08.86**

(54) Verfahren und Anlage zum Herstellen von Betonzuschlagstoffen aus Waschbergen.

(30) Priorität: **12.11.85 DE 3540068**

(43) Veröffentlichungstag der Anmeldung:
**20.05.87 Patentblatt 87/21**

(45) Bekanntmachung des Hinweises auf die Patenterteilung:
**16.05.90 Patentblatt 90/20**

(84) Benannte Vertragsstaaten:
**BE DE FR GB SE**

(56) Entgegenhaltungen:
**EP-A- 0 039 798**
**WO-A-85/04467**
**DE-A- 3 420 871**
**DE-B- 1 165 477**
**DE-C- 927 136**
**GB-A- 653 357**

(73) Patentinhaber: **Deutsche Babcock Anlagen Aktiengesellschaft, Duisburger Strasse 375, D-4200 Oberhausen 1(DE)**

(72) Erfinder: **Wischniewski, Martin, Fabritiusstrasse 38, D-4150 Krefeld 11(DE)**
Erfinder: **Lackmann, Horst, Ritterstrasse 19, D-4100 Duisburg 14(DE)**
Erfinder: **Bäuerle, Hans Gottfried, Dr., Kieselei 11, D-4030 Ratingen 6(DE)**

(74) Vertreter: **Planker, Karl-Josef, Dipl.-Phys., c/o Deutsche Babcock Anlagen AG Parkstrasse 29 Postfach 4 + 6, D-4150 Krefeld 11(DE)**

## Beschreibung

Die Erfindung betrifft ein Verfahren zum Herstellen von Betonzuschlagstoffen aus Waschbergen gemäß dem Oberbegriff des Patentanspruches 1. Außerdem betrifft die Erfindung eine zur Durchführung des Verfahrens geeignete Anlage gemäß dem Oberbegriff des Patentanspruches 2.

In Deutschland und anderen Ländern, die über einen eigenen Steinkohlenbergbau verfügen, bieten sich die Waschberge aus der Kohleaufbereitung als Rohstoff für die Herstellung von Betonzuschlagstoffen an, die den immer knapper werdenden Kies möglicherweise auf die Dauer teilweise ersetzen können. Der Herstellungsprozeß umfaßt eine Wärmebehandlung, die in erster Linie eine Verbesserung der Festigkeit und eine Her absetzung der Wasseraufnahme bewirkt. Der Wärmebedarf wird dabei ganz oder teilweise durch die Verbrennung der an den Waschbergen noch anhaftenden Kohle gedeckt.

Ein Verfahren der im Oberbegriff des Patentanspruchs 1 angegebenen Gattung ist in der am Anmeldetag noch nicht veröffentlichten deutschen Patentanmeldung 34 20 871.2 beschrieben. Gegenstand dieser Patenanmeldung ist ein Schachtofen, von dem der Obergriff des Anspruches 2 ausgeht.

In derartigen Schachtöfen ist es nicht ohne weiteres möglich, ein Produkt herzustellen, das dem für Betonzuschlagstoffe vorgeschriebenen Kornspektrum entspricht. Der Feinkornanteil würde durch die rostartig ausgebildeten Böden hindurch rieseln. Es kann dahingestellt bleiben, ob dieses Problem durch konstruktive Ausbildung der Böden gelöst werden könnte. Denn der erforderliche relativ hohe Feinkornanteil wäre mit dem weiteren Nachteil verbunden, den Strömungswiderstand der schichtförmigen Haufwerke zu vervielfachen; das würde eine Behandlung mit durchströmendem Gas praktisch unmöglich machen. Als weiterer Nachteil käme noch hinzu, daß erfahrungsgemäß bei Schüttungen mit sehr breitem Kornspektrum Entmischungsvorgänge unvermeidlich sind; daraus ergibt sich eine inhomogene Verteilung des Feinkornanteiles, die wiederum einem inhomogenen Strömungsverlauf des Behandlungsgases, eine ungleichmäßige Temperaturverteilung und ungleichmäßige Produkteigenschaften bedingt. Daher kann mit dem Verfahren, das in der unveröffentlichten älteren Anmeldung beschrieben ist, nur die grobe Komponente des Betonzuschlagstoffes hergestellt werden. Die Feinkornkomponente muß aus anderen Quellen bereitgestellt werden, z.B. in Form von Sand.

Ferner hat sich bei der Durchführung des erwähnten Verfahrens gezeigt, daß sowohl das aus der Reaktionszone des Schachtofens austretende Gas als auch das Abgas der Trocknungszone einen erheblichen Gehalt an Schwefeldioxid haben. Der Schwefelgehalt läßt sich zwar durch Einblasen von Kalk in die Reaktionszone herabsetzen. Da es aber Schwierigkeiten bereitet, den Kalk über den Schachtquerschnitt gleichmäßig zu verteilen und eine ausreichende Umsetzung von Kalk und Schwefel in der Reaktionszone sicherzustellen, sind die Ergebnisse nicht befriedigend.

Durch die DE-PS 9 27 136 ist es auch schon bekannt, aus feinkörnigen Waschbergen im Wirbelschichtreaktor Baustoffe herzustellen. Aus dieser Druckschrift ist es auch bekannt, der Wirbelschicht Kalk zuzuführen.

Der Erfindung liegt die Aufgabe zugrunde, ein Verfahren der im Oberbegriff des Patentanspruches 1 angegebenen Gattung so zu ergänzen, daß das Produkt das gesamte für die Betonherstellung vorgeschriebene Kornspektrum enthält und daß eine einfache und wirksame Abgasentschwefelung ermöglicht wird. Eine weitere Aufgabe besteht darin, eine Anlage der im Oberbegriff des Anspruches 2 angegebenen Gattung zu ergänzen, so daß sie zur Durchführung des erfindungsgemäßen Verfahrens geeignet ist.

Die erstgenannte Aufgabe wird durch die kennzeichnenden Merkmale des Patentanspruches 1 gelöst.

Im Sinne des Patentanspruches 1 haben die "Grobwaschberge" Korngrößen von etwa 10 mm bis 60 mm. Die "Feinwaschberge" haben Korngrößen bis zu etwa 10 mm. Es kommt nicht darauf an, eine bestimmt Grenze, wie z.B. 10 mm, exakt einzuhalten. Es schadet nicht, wenn sich die Kornspektren der beiden Fraktionen im Grenzbereich überschneiden. Wesentlich ist, daß das Kornspektrum der Feinwaschberge auf einen Bereich beschränkt ist, der eine Behandlung in der Wirbelschicht zuläßt, und daß die Grobwaschberge keine nennenswerten Feinkornanteile enthalten, die durch die Roste des Schachtofens hindurchfallen. Zur Vermeidung von Entmischungsvorgängen und Inhomogenitäten sollte das Verhältnis zwischen der oberen und der unteren Korngrenze der Grobwaschberge nicht viel größer als 5 zu 1 sein. Aufgrund dieser Angaben ist der Fachmann in der Lage, je nach den Gegebenheiten und Erfordernissen des Einzelfalles die Grenze zwischen den beiden Fraktionen optimal festzulegen.

Die an zweiter Stelle genannte Aufgabe wird durch die kennzeichnenden Merkmale des Patentanspruches 2 gelöst.

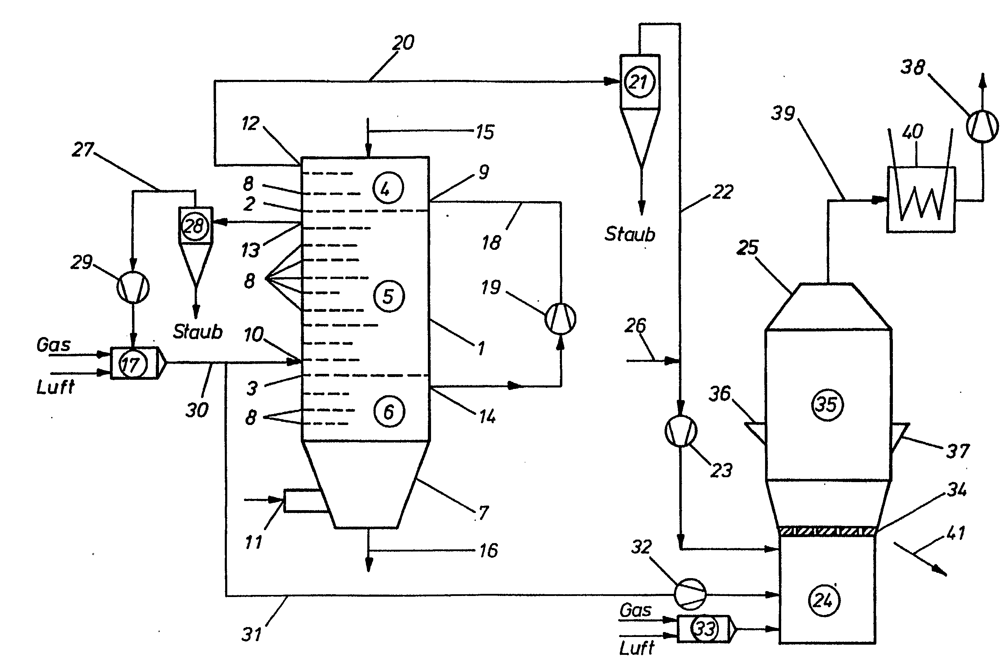

Die Zeichnung dient zur Erläuterung der Erfindung anhand eines vereinfacht dargestellten Ausführungsbeispieles einer erfindungsgemäßen Anlage.

Ein Schachtofen 1 ist durch Böden 2, 3 in drei Behandlungszonen unterteilt, und zwar eine Trocknungszone 4, eine Reaktionszone 5 und eine Kühlzone 6. Unter der Kühlzone 6 schließt sich der Ausfalltrichter 7 an.

Die Behandlungszonen sind durch rostartige Böden 8, die in der Zeichnung nur angedeutet sind, in etagenartige Kammern unterteilt. Die Zonen 4 und 6 umfassen nur wenige Kammern, die Zone 5 besteht jedoch aus einer Vielzahl von Kammern.

Die Böden 2, 3 bestehen ebenso wie die Böden 8 aus schmalen, langgestreckten, eng nebeneinander liegenden Elementen, die aus ihrer Ruhestellung verlagert werden können, beispielsweise durch Kippen um ihre Längsachse. Die Böden 2, 3 bilden in ihrer Ruhestellung nahezu gasdichte Abschottungen zwischen den Behandlungskammern. Die Böden 8 sind gasdurchlässig.

Jede Behandlungszone hat einen Einlaß für ein Behandlungsgas und einen Auslaß für das Abgas. Die Gaseinlässe sind in der Zeichnung mit den Bezugszeichen 9, 10, 11 bezeichnet, die Auslässe mit den Bezugszeichen 12, 13, 14. Der Einlaß für das Behandlungsgas der Kühlzone 6 mündet in den Ausfalltrichter 7.

Bezüglich weiterer nicht zur vorliegenden Erfindung gehörender Einzelheiten wird auf die eingangs erwähnte deutsche Patentanmeldung 34 20 871.2 verwiesen, die eine ausführliche Beschreibung eines geeigneten Schachtofens und der zugehörigen Funktionen und Verfahrensabläufe enthält.

Mit einer durch den Pfeil 15 symbolisierten Aufgabevorrichtung werden dem Schachtofen 1 von oben Grobwaschberge zugeführt und auf dem obersten Boden der Trocknungszone 4 gleichmäßig verteilt, so daß sie ein schichtförmiges Haufwerk bilden. Nach einer vorgebbaren Verweilzeit werden die Elemente des obersten Bodens gekippt, so daß das daraufliegende Material durch die Zwischenräume auf den nächst unteren Boden fällt. Nach der gleichen Verweilzeit werden die Elemente des zweiten Bodens ebenfalls gekippt. Dieser Vorgang wiederholt sich bei den weiter unten liegenden Böden, so daß die Materialschicht den Schachtofen von oben nach unten schrittweise durchwandert und schließlich durch den Ausfalltrichter 7 gemäß Pfeil 16 zu einer nicht dargestellten Fördereinrichtung gelangt. Die Materialzufuhr und das Kippen der Böden erfolgen in regelmäßigem Zeittakt, so daß im stationären Betrieb der Schachtofen entsprechend der Anzahl der Böden zu jedem Zeitpunkt eine Vielzahl von Schichten enthält.

Innerhalb der einzelnen Behandlungszonen werden die von den gasdurchlässigen Böden 8 abgestützten Schichten im wesentlichen senkrecht zur Schichtebene vom Behandlunggas durchströmt. Das Behandlungsgas der Zone 4 ist vorgewärmte Trocknungsluft, die außer der Trocknung auch eine gewisse Vorwärmung des Gutes bewirkt. Das Behandlungsgas der Zone 5 ist Heißgas, das in einem Brenner 17 erzeugt wird.

Im oberen Bereich der Zone 5 werden die flüchtigen Brennstoffbestandteile der Grobwaschberge ausgetrieben und verbrannt. Im mittleren Bereich werden die anhaftenden festen Brennstoffpartikel verbrannt. Im unteren Bereich erfolgt die Keramisierung. Das Behandlungsgas der Zone 6 ist Luft, die aus der Umgebung angesaugt wird.

Das Abgas der Zone 6, d.h. die erwärmte Kühlluft, wird über eine Verbindungsleitung 18 mittels eines Gebläses 19 der Zone 4 als Trocknungsgas zugeführt. Das Abgas der Trocknungszone 4 gelangt über eine Leitung 20 zunächst zu einem Entstauber 21 und dann über eine Leitung 22 mit Gebläse 23 zur Windkammer 24 eines Wirbelschichtreaktors 25. Durch einen Stutzen 26 wird ggf. zusätzliche Luft angesaugt.

Das Abgas der Reaktionszone 5 wird über eine Rückführleitung 27, zu der ein Entstauber 28 und ein Gebläse 29 gehören, vollständig zu dem Brenner 17 zurückgeführt. Von einer von dem Brenner 17 ausgehenden Heißgasleitung 30, die in den Gaseinlaß 10 der Reaktionszone 5 mündet, ist eine Leitung 31 abgezweigt, die in die Windkammer 24 des Wirbelschichtreaktors 25 einmündet. Über diese Leitung wird mit dem Gebläse 32 überschüssiges, d.h. im Schachtofen 1 nicht benötigtes Heißgas dem Wirbelschichtreaktor 25 zugeführt. Aus der Abluft der Trocknungszone 4 des Schachtofens 1 und dem überschüssigen Heißgas bildet sich in der Windkammer 24 ein sauerstoffhaltiges, vorgewärmtes Gasgemisch, das als Verbrennungs- und Fluidisierungsgas für die Wirbelschicht dient.

Ein zusätzlicher Brenner 33 dient lediglich dem Zweck, in der Anfahrphase den Wirbelschichtreaktor 25 mit Heißgas zu versorgen.

Durch einen Düsenboden 34 gelangt das Verbrennungs- und Fluidisierungsgas in die Wirbelkammer 35. Diese wird über eine Aufgabevorrichtung 36 kontinuierlich mit Feinwaschbergen beschickt, deren brennbare Bestandteile in der Wirbelschicht bei Temperaturen um 800 °C verbrennen. Zwecks Einbindung des Schwefels, der teils bei der Verbrennung der Feinwaschberge frei wird und teils mit den vom Schachtofen 1 kommenden Gasströmen in den Wirbelschichtreaktor 25 gelangt, wird über eine Aufgabevorrichtung 37 kontinuierlich Kalk zugeführt.

Das heiße, weitgehend schwefelfreie Abgas des Wirbelschichtreaktors 25 wird mit einem Gebläse 38 durch eine Leitung 39 über einen Wärmetauscher 40 gesaugt und anschließend über einen nicht dargestellten Entstauber ins Freie geblasen.

Der aus dem Wirbelschichtreaktor 25 gemäß Pfeil 41 ausgetragene feinkörnige Abbrand wird dem im Schachtofen 1 erzeugten Grobgut beigemischt. Das Kornspektrum der Mischung entspricht den Vorschriften für Betonzuschlagstoffe.

**Patentansprüche**

1. Verfahren zum Herstellen von Betonzuschlagstoffen aus Waschbergen, mit folgenden Merkmalen:

a) Grobwaschberge durchwandern einen Schachtofen schrittweise von oben nach unten in Form von schichtförmigen Haufwerken, die durch Böden abgestützt sind und rechtwinklig zur Schichtebene von Behandlungsgas durchströmt werden;

b) die Grobwaschberge werden dabei zunächst in einer Trocknungszone mit Trocknungsgas behandelt, anschließend in mindestens einer Reaktionszone unter Zufuhr von Heißgas von flüchtigen und festen Brennstoffbestandteilen befreit und keramisiert und schließlich in einer Kühlzone mit Luft gekühlt;

c) die aus der Kühlzone austretende erwärmte Luft wird als Trocknungsgas verwendet;

d) das Heißgas für die Reaktionszone wird mittels eines Brenners erzeugt, zu dem Abgas aus der Reaktionszone zurückgeführt wird;

gekennzeichnet durch folgende Merkmale:

e) das im Schachtofen hergestellte grobe Produkt wird mit dem feinkörnigen Ausbrand eines Wirbelschichtreaktors gemischt, der mit Feinwaschbergen unter Kalkzusatz beschickt wird;

f) im Wirbelschichtreaktor wird als Verbrennungs- und Fluidisierungsgas ein Gasgemisch verwendet, das die Abluft der Trocknungszone des Schachttrockners und überschüssiges Heißgas aus dem Brenner enthält.

2. Anlage zur Durchführung des Verfahrens gemäß Anspruch 1, mit folgenden Merkmalen:

a) der Schachtofen ist durch Böden in eine Trocknungszone, mindestens eine Reaktionszone und eine Kühlzone unterteilt;

b) die einzelnen Zonen sind durch gasdurchlässige Böden in Kammern unterteilt;

c) jede Zone hat einen Einlaß für ein Behandlungsgas und einen Auslaß für Abgas;

d) vom Gasauslaß der Kühlzone ist eine Verbindungsleitung zu dem Gaseinlaß der Trocknungszone geführt;

e) von einem Brenner ist eine Heißgasleitung zum Gaseinlaß der Reaktionszone geführt;

f) der Gasauslaß der Reaktionszone ist durch eine Rückführleitung mit dem Brenner verbunden;

gekennzeichnet durch folgende Merkmale:

g) an dem Gasauslaß (12) der Trocknungszone (4) ist eine Leitung (20, 22) angeschlossen, die in die Windkammer (24) eines Wirbelschichtreaktors (25) mündet;

h) von der Heißgasleitung (30) ist eine Leitung (31) abgezweigt, die ebenfalls in die Windkammer (24) des Wirbelschichtreaktors (25) mündet.

## Claims

1. Process for the production of aggregate for concrete from washery tailings, with the following characteristics:

a) coarse washery tailings travel step by step through a shaft furnace from top bottom in the form of layers in bulk which are supported by plates and have treatment gas flowing through them at right angles to the layer plane;

b) the coarse washery tailings are at the same time first of all treated in a drying zone with drying gas, then in at least one reaction zone with the addition of hot gas they are freed of volatile and solid fuel constituents and ceramified and finally cooled down with air in a cooling zone;

c) the air heated up and leaving the cooling zone is used as the drying gas;

d) the hot gas for the reaction zone is produced by means of a burner to which waste gas from the reaction zone is returned;

characterized by the following features:

e) the coarse product produced in the shaft furnace is mixed with the fine grained fully combusted material from a fluidized bed reactor which is supplied with fine washery tailing with the addition of lime;

f) in the fluidized bed reactor the combustion and fluidization gas used is a gas mixture which contains the waste air from the drying zone of the shaft-type dryer and excess gas from the burner.

2. Plant for the carrying out of the process according to claim 1, with the following features:

a) the shaft furnace is divided by plates into a drying zone, at least one reaction zone and one cooling zone;

b) the individual zones are divided into chambers by means of gas-permeable plates;

c) each zone has one inlet for a treatment gas and one outlet for waste gas;

d) from the gas outlet of the cooling zone a connecting line is led to the gas inlet of the drying zone;

e) from one burner a hot gas line is led to the gas inlet of the reaction zone;

f) the gas outlet of the reaction zone is connected with the burner by means of a return line;

characterized by the following features:

g) to the gas outlet (12) of the drying zone (4) a line (20, 22) is connected which leads into the air chamber (24) of a fluidized bed reactor (25);

h) from the hot gas line (30) a line (31) branches off which also leads into the air chamber (24) of the fluidized bed reactor (25).

## Revendications

1. Procédé pour la fabrication d'agrégats pour bétons à partir de déchets de lavage, avec les caractéristiques suivantes:

a) De gros déchets de lavage non tassés traversent progressivement un four vertical du haut en bas en étant supportés par des fonds et traversés perpendiculairement par des gaz de traitement;

b) les gros déchets de lavage sont d'abord traités dans une zone de séchage par des gaz de séchage, ensuite, ils sont libérés des matières volatiles et des matières combustibles solides et sont céramizés dans au moins une zone de réaction par introduction de gaz chauds, et, finalement, ils sont refroidis par de l'air dans une zone de refroidissement;

c) l'air chauffé sortant de la zone de refroidissement est utilisé comme gaz de séchage;

d) les gaz chauds pour la zone de réaction sont produits au moyen d'un brûleur; ils sont mélangés avec des gaz recyclés de la zone de réaction;

avec les caractéristiques suivantes:

e) le gros proudit fabriqué dans le four vertical est mélangé avec les fins imbrûlés provenant d'un réacteur à couche fluidisée qui est alimenté en fins déchets de lavage sous addition de chaux;

f) les gaz de combustion et de fluidisation utilisés dans le réacteur à couche fluidisée sont un mélange de gaz comprenant l'air de sortie de la zone de séchage du four vertical et l'excès des gaz chauds du brûleur.

2. Installation pour réaliser le procédé suivant la revendication 1 avec les caractéristiques suivantes:

a) le four vertical est divisé, par des fonds, dans au moins une zone de séchage, une zone de réaction et une zone de refroidissement;

b) les différentes zones sont divisées en compartiments par des fonds perméables aux gaz;

c) chaque zone a une entrée pour les gaz de traitement et une sortie pour l'évacuation des gaz;

d) une conduite de liaison est installée entre la sortie des gaz de la zone de refroidissement et l'entrée des gaz de la zone de séchage;

e) une conduite de gaz chauds est installée entre un brûleur et l'entrée des gaz dans la zone de réaction;

f) la sortie des gaz de la zone de réaction est raccordée au brûleur par une conduite de recyclage; caractérisée par le fait

g) qu'à la sortie des gaz (12) de la zone de séchage (4), est raccordée la conduite (20, 22) qui débouche dans la chambre de soufflage (24) d'un réacteur à couche fluidisée (25);

h) que de la conduite des gaz chauds (30), part une conduite (31) qui débouche également dans la chambre de soufflage (24) du réacteur à couche fluidisée (25).

Gas
Luft

Staub

Staub

Gas
Luft

EP 0 222 078 B1